Europäisches Patentamt

European Patent Office

Office européen des brevets

(19)

(11) Veröffentlichungsnummer : **0 062 841**
**B1**

(12)

# EUROPÄISCHE PATENTSCHRIFT

(45) Veröffentlichungstag der Patentschrift :
**17.10.84**

(51) Int. Cl.³ : **F 24 D 19/08**, F 16 L 55/07,
F 16 K 24/00

(21) Anmeldenummer : **82102725.7**

(22) Anmeldetag : **31.03.82**

(54) Entlüftungsvorrichtung.

(30) Priorität : **10.04.81 DE 3114609**

(43) Veröffentlichungstag der Anmeldung :
**20.10.82 Patentblatt 82/42**

(45) Bekanntmachung des Hinweises auf die Patenterteilung : **17.10.84 Patentblatt 84/42**

(84) Benannte Vertragsstaaten :
**AT BE CH DE FR GB IT LI LU NL SE**

(56) Entgegenhaltungen :
**DE-B- 2 926 447**
**DE-C- 1 579 902**
**FR-A- 718 035**

(73) Patentinhaber : **Anton Hummel GmbH Metallwarenfabrik**
**2-4 Mozartstrasse**
**D-7808 Waldkirch (DE)**

(72) Erfinder : **Gehring, Peter**
**Eichhof 11**
**D-7809 Simonswald (DE)**

(74) Vertreter : **Patentanwälte Dipl.-Ing. Hans Schmitt**
**Dipl.-Ing. Wolfgang Maucher**
**Dreikönigstrasse 13**
**D-7800 Freiburg i.Br. (DE)**

EP 0 062 841 B1

## Beschreibung

Die Erfindung betrifft eine Entlüftungsvorrichtung für mit einer Flüssigkeit zu füllende oder gefüllte Behältnisse oder Systeme, z. B. Rohrsysteme, insbesondere Heizungsanlagen, Heizkörper od. dgl., mit wenigstens einer vorzugsweise zentrischen Luftabführung nach außen und einem höher als diese liegenden Lufteintritt im Inneren des Behältnisses.

Bei der Entlüftung von Objekten, die mit einer Flüssigkeit gefüllt werden, z. B. bei der Entlüftung von Heizungsanlagen, stellt sich immer wieder das Problem, in den Heizkörpern die Luft möglichst weit oben abzuführen, um durch das steigende Flüssigkeitsniveau eine möglichst große Wärmeabstrahlfläche am Heizkörper zu erhalten. Dazu sind Entlüftungsvorrichtungen der eingangs erwähnten Art geschaffen worden.

Aus der FR-PS 718 035 kennt man Entlüftungsvorrichtungen, bei denen ein Entlüftungsstopfen als Lufteintritt einen schräg nach oben gerichteten Durchlaßkanal aufweist, der an einer möglichst hohen Stelle münden soll. Ferner ist aus der DE-PS 15 79 902 eine Entlüftungsvorrichtung bekannt, bei der als Lufteintritt und Abführung ein schräg nach oben führendes Röhrchen vorgesehen ist, mit welchem gegenüber einer Bohrung eine größere Höhe erzielt werden kann.

Diesen verschiedenen Konstruktionen von Entlüftungsarmaturen haftet der Nachteil an, daß eine präzise und demgemäß zeitaufwendige Montage notwendig ist, damit der Lufteintritt im Inneren des zu entlüftenden Behälters wirklich immer in der obersten Stellung angeordnet wird. Andernfalls wird nämlich der Zweck der Anordnung nicht erreicht oder bei versehentlich nach unten gerichtetem Lufteintritt sogar in sein Gegenteil verkehrt.

Aus der Praxis ist eine Anordnung bekannt, bei der an der Außenseite der Vorrichtung eine Anzeige vorgesehen ist, die mit dem Lufteintritt übereinstimmt, damit anhand dieser Anzeige die richtige Orientierung gefunden werden kann. Andernfalls wird eine falsche Montage praktisch nicht erkennbar. Eine solche Anzeigevorrichtung ist jedoch als besonders aufwendig und demgemäß teuer anzusehen.

Es besteht deshalb die Aufgabe, eine Entlüftungsvorrichtung der eingangs erwähnten Art zu schaffen, bei der die Konstruktion vereinfacht ist, eine spezielle Anzeigevorrichtung vermieden wird und selbst bei beliebiger Montage eine Entlüftung in möglichst großer Höhe erfolgen kann.

Die Lösung dieser Aufgabe besteht darin, daß wenigstens drei Lufteintritte etwa gleichmäßig auf einem Kreis, am Umfang und/oder an der Stirnseite des inneren Bereiches an der Entlüftungsvorrichtung vorgesehen und jeweils mit der oder einer Luftabführung verbunden sind und daß zumindest zwischen dem oder den in Gebrauchsstellung oberen Lufteintritt(en) und der Luftabführung wenigstens während der Entlüftung durch Strömung ein Druckgefälle vorgesehen ist.

Durch die Verwendung mehrerer, wenigstens dreier Lufteintritte ist die Möglichkeit, durch eine falsche Montage nicht den obersten Entlüftungspunkt zu erreichen, erheblich vermindert. Bei jeder beliebigen dichten Befestigung einer derartig ausgestalteten Entlüftungsvorrichtung ergibt sich eine funktionsfähige Position, weil zumindest einer der Lufteintritte sich in einem erhöhten Bereich befinden wird. Beim Entlüften z. B. eines Heizkörpers entweicht also die Luft wie bei einer normalen zentralen Entlüftung durch die Luftabführung oder austrittsöffnung ins Freie, wobei je nach Füllgeschwindigkeit zwischen der Austrittsöffnung und der in oberster Position befindliche Lufteintrittsöffnung ein unterschiedlicher Sog entsteht, welcher die Luft genügend schnell austreten läßt, um den Flüssigkeitsspiegel außerhalb der Entlüftungsvorrichtung höher steigen zu lassen als bei einer nur zentralen Lüftung. Gelangt dabei auch Wasser durch die tiefer liegenden Eintrittsöffnungen in das Innere der Entlüftungsvorrichtung und erreicht den Austrittskanal, vermischt sich dieses Wasser mit den von oben abströmenden Luft und verläßt als Luft-Wasser-Gemisch die Heizungsanlage so lange, bis der steigende Wasserstand auch die oberste Eintrittsöffnung erreicht bzw. übersteigt. Nunmehr ist der Luftaustritt unterbrochen und es tritt nur noch Wasser aus, was an einem entsprechend ruhigen Wasserstrahl deutlich erkennbar ist. Die Entlüftung ist dann bestmöglich abgeschlossen. Sollte noch eine geringe Restmenge von Luft in einem Heizkörper verbleiben, wird diese je nach Betriebsdruck mehr oder weniger zusammengedrückt, so daß der Wasserspiegel noch geringfügig steigen kann.

Wiederholt man diesen Vorgang, bevor der Wasserspiegel unter den am tiefsten liegenden Lufteintritt gesunken ist, wird bei einem Wasserspiegel über der am höchsten stehenden Eintrittsöffnung nur Wasser austreten, bei einem Wasserstand unter der höchsten Eintrittsöffnung jedoch wird wieder ein Luft-Wasser-Gemisch und bei einem Wasserstand unter dem Austrittsabgang bzw. der Luftabführung wieder überwiegend Luft austreten.

Für ihre Montage kann die Entlüftungsvorrichtung insbesondere eindrehbar, vorzugsweise einschraubbar und/oder mittels Flansch und Befestigungselementen, wie z. B. Schrauben, anbringbar sein. Die Anbringung kann dann ohne Rücksicht auf den Lufteintritt erfolgen, da sich bei drei oder gar noch mehr Lufteintritte in der Entlüftungsvorrichtung auf jeden Fall ein solcher Lufteintritt immer in entsprechend hoher Stellung befinden.

Zweckmäßigerweise können die Lufteintrittsöffnungen der Entlüftungsvorrichtung auf einem vorzugsweise größtmöglichen Umfang oder Kreis um die insbesondere zentrale und gegebenenfalls als Kernbohrung ausgebildete Luftabführung angeordnet sein. Dabei können die Lufteintritte und -leitungen zu der Luftabführung als radial und/oder schräg von außen nach innen verlaufende Kanäle ausgebildet sein. Dabei können die Luftführungskanäle einen kreisförmigen Querschnitt haben und vorzugsweise als in die Luftabführung oder eine Verlängerung der Luftabführung mündende Bohrungen ausgebildet sein. Der Lufteintritt in die Lufteinführungskanäle kann dabei gegebenenfalls auch innerhalb oder mittels einer Nut, eines Schlitzes, einer Abflachung od. dgl. Verformung eines als Entlüftungsvorrichtung ausgebildeten Ventilkörpers angeordnet sein. Diese Verformung hilft dann bei der Luftabführung mit. Die den Lufteintritt in die Luftkanäle aufweisende Verformung kann dabei axial oder schraubenlinienförmig an der Entlüftungsvorrichtung verlaufend angeordnet sein.

Eine Ausgestaltung der Erfindung von besonderer Bedeutung kann darin bestehen, daß die Entlüftungsvorrichtung im Bereich der Lufteintritte wenigstens zweiteilig ausgebildet ist und die zu der Luftabführung führenden Lufteintritte ganz oder teilweise in einem der beiden miteinander verbindbaren Teile angeordnet sind. Dadurch können die Luftkanäle in beliebiger Querschnittsform leicht und ohne zusätzliche Arbeitsgänge hergestellt werden. Ebenfalls können dadurch von Fall zu Fall die Lufteintritte relativ zu der Luftabführung verstellt werden. Die die Entlüftungsvorrichtung bildenden Teile können z. B. mittels Schnapp-, Schraub-, Preß-, Klebe-, Niet-, Einrast- od. dgl. Verbindung aneinander befestigt sein. Dabei kann diese Verbindung gegebenenfalls lösbar oder auch unlösbar sein. Ferner können die beiden Teile nach ihrer insbesondere dichten Verbindung relativ zueinander drehbar und gegebenenfalls festlegbar sein. Dadurch läßt sich eine bestimmte Zuordnung der Lufteintritte zu den Befestigungsmitteln der Entlüftungsvorrichtung nachträglich einstellen.

Eine besonders schnelle und einfache Montage ergibt sich, wenn eine Steckverbindung der beiden Teile, z. B. eine Schnapp-, Rast-, Preß- oder Klebeverbindung od. dgl. vorgesehen ist, wobei das aufsteckbare Teil die Lufteintritte aufweist und gegebenenfalls nachträglich an einer Entlüftungsvorrichtung anbringbar sein kann. Dadurch können eventuell schon vorhandene Entlüftungsvorrichtungen mit bisher zentraler Entlüftung durch ein Zusatzteil in eine erfindungsgemäße Entlüftungsvorrichtung verwandelt werden.

Die Entlüftungsvorrichtung kann einen Ansatz aufweisen, auf welchen ein ringförmiger Teil des die Lufteintritte ganz oder teilweise aufweisenden Zusatzteiles paßt. Es ist jedoch auch möglich, daß der Zusatzteil einen Ansatz aufweist, der in eine entsprechende Höhlung der Entlüftungsvorrichtung paßt oder teilweise eingreift.

Die Lufteintritte und -führungen zu der Luftabführung können durch das Verbinden der beiden Teile gebildet sein und wenigstens einer der Teile kann Schlitze od. dgl. aufweisen, die durch das Gegenstück zu Kanälen od. dgl. Leitungen werden.

Ferner ist es möglich, daß ein Deckel, eine Abdeckscheibe, eine Kappe od. dgl. vorgesehen ist, die die Lufteintritte ganz oder teilweise enthält oder bildet. Ferner ist es möglich, daß an der Stirnseite wenigstens eines der beiden zusammenfügbaren Teile an der dem Gegenstück zugewandten Seite Schlitze, Nuten od. dgl. eingeformt sind, die mit dem Gegenstück zusammen die Luftführungskanäle zu der Luftabführung bilden.

Eine abgewandelte Ausführungsform kann darin bestehen, daß die beiden miteinander verbindbaren und dadurch die Luftführung bildenden Teile in verbundenem Zustand wenigstens einen Hohlraum umschließen oder bilden, in den einerseits Lufteintritte münden und von dem andererseits wenigstens eine Luftabführung wefgührt. Dabei ist eine Ausgestaltung möglich, bei der eines der beiden Teile in dem Hohlraum des anderen insbesondere axial oder in Richtung der Luftabführleitung verschiebbar und/oder mit verschiedenen Einstecktiefen anbringbar ist. Somit können unterschiedlich starke Hohlräume gebildet und gegebenenfalls eingestellt werden, so daß eine Anpassung an Größe und Form der zu entlüftenden Behältnisse möglich ist. Dabei ist sogar ein völliger Verschluß der Luftabführung bei völlig eingedrücktem Gegenstück in den Hohlraum denkbar.

Die Entlüftungsvorrichtung kann in unterschiedlicher Weise etwa in den schon bekannten Formen hergestellt sein. Es ist aber auch möglich, daß wenigstens eines der beiden sie bildenden Teile aus Blech geformt ist und mit dem Gegenstück verschraubt, vernietet, verschweißt, verlötet oder zusammengesteckt ist. Insbesondere bei einer Ausbildung aus Blech kann ein kappenförmiger Rundkörper od. dgl. vorgesehen sein, an welchem als Luftabführung eine Entlüftungsschraube vorzugsweise mit Ventilschraube od. dgl. angebracht ist. Bei Verwendung einer mit einem Grundkörper verbindbaren Kappe als zweites Teil der Vorrichtung können die Lufteintritte an deren Umfang, an deren Stirnseite und/oder im Übergangsbereich zwischen Umfang und Stirnseite angeordnet und als Bohrungen, Einfräsungen od. dgl. ausgebildet sein. Bei der Wahl von Blech zur Herstellung der Vorrichtung werden zweckmäßigerweise sogar beide Teile aus Blech gefertigt.

Die Vorrichtung kann bevorzugt aus Metall und/oder aus Kunststoff bestehen. Dabei ist vor allem bei einer mehrteiligen Ausführungsform möglich, daß der Grundkörper mit der Luftabführung beispielsweise aus Metall (oder aber auch aus Kunststoff) und der als Kappe, Deckel, Scheibe od. dgl. ausgebildete Zusatzteil aus Kunststoff od. dgl. oder einem gegebenenfalls anderen Metall als der Grundkörper besteht. Ebenso ist auch eine umgekehrte Werkstoff-Paarung denkbar.

Vor allem bei Kombination einzelner oder mehrerer der vorbeschriebenen Möglichkeiten und Maßnahmen ergibt sich eine einfach herstellbare Entlüftungsvorrichtung, bei der die Montage ohne Rücksicht auf die Lufteintritte erfolgen kann, weil aufgrund der Anzahl von Lufteintritten immer wenigstens ein solcher Lufteintritt genügend hoch an einem zu entlüftenden Behältnis od. dgl. zu liegen kommt, um eine gute Entlüftung zu erzielen. Besondere Vorkehrungen, durch die ein einziger exzentrischer Lufteintritt möglichst hoch zu liegen kommt wie z. B. entsprechend gekuppelte Markierungen od. dgl., können vermieden werden.

Nachstehend ist die Erfindung mit ihren ihr als wesentlich zugehörenden Einzelheiten anhand der Zeichnung noch näher beschrieben. Es zeigt im einzelnen jeweils im Längsschnitt :

Figur 1 eine einteilige Entlüftungsvorrichtung in Form eines an dem zu entlüftenden Behälter anschraubbaren Stopfens mit einer zentralen, mittels Entlüftungsschraube verschließbaren Luftabführung, in die im Inneren mehrere radial angeordnete Lufteintritte mit entsprechenden Kanälen münden,

Figur 2 bis 8 zweiteilige Entlüftungsvorrichtungen, bei denen die zu der Luftabführung führenden Lufteintritte ganz oder teilweise in einem zusätzlichen Teil untergebracht sind, welches auf verschiedene Weisen an dem Grundkörper anbringbar ist und auf verschiedene Weisen geformt sein kann, wobei jeweils zusätzlich noch eine Ventilschraube dargestellt ist,

Figur 9 bis 12 mehrteilige Entlüftungsvorrichtungen, wobei zu ein Grundkörper jeweils verschieden gestaltete, aber wahlweise verwendbare Zusätzliche Teile gezeichnet sind,

Figur 13 und 14 eine einteilige Ausführungsform mit axialen Nuten, an deren Grund der Eintritt in die jeweiligen zu den Luftabführungen führenden Kanäle angeordnet ist,

Figur 15 bis 18 mehrere Beispiele einer erfindungsgemäßen Vorrichtung, die aus Blech geformt und wenigstens zweiteilig ausgebildet ist, wobei bei den Ausführungsformen nach den Figuren 16 bis 18 eine Verstellung des Hohlraumes zwischen Lufteintritt und Luftabführung möglich ist und jeweils zu einem Grundkörper mehrere wahlweise verwendbare zusätzliche Teile gezeichnet sind.

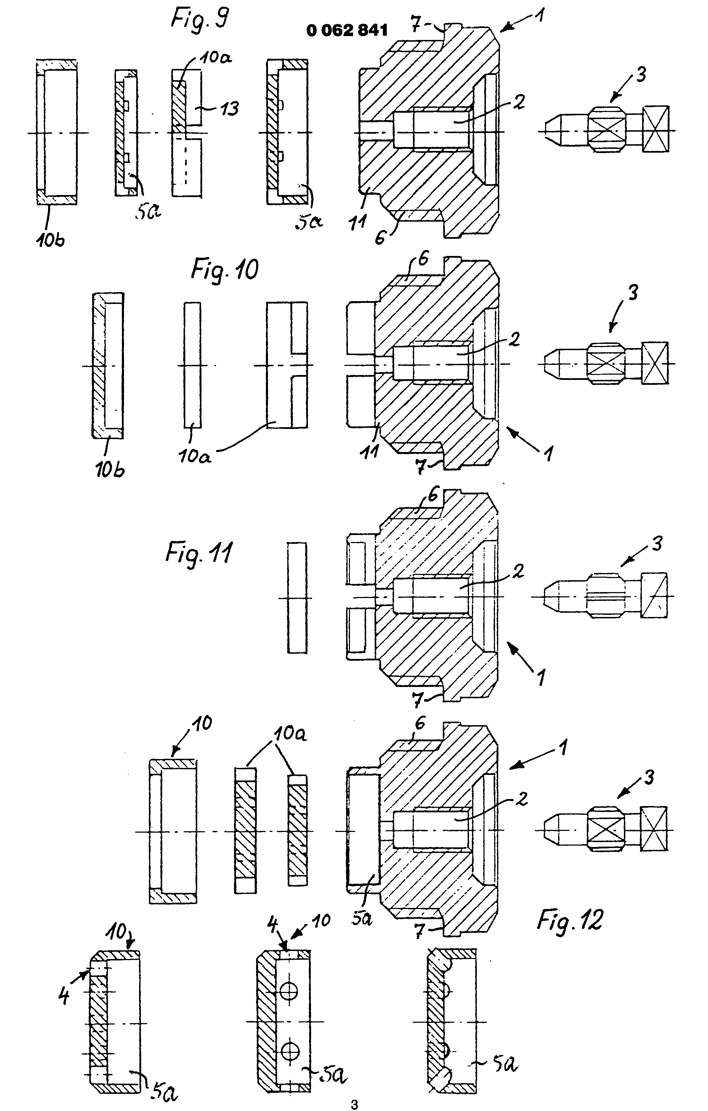

Im folgenden sind übereinstimmende Teile selbst bei unterschiedlicher und sogar stark abweichender Formgebung mit übereinstimmenden Bezugszeichen versehen, um vorhandene Übereinstimmungen bezüglich Funktion und Wirkungsweise zu verdeutlichen. Allen Ausführungsformen einer im ganzen mit 1 bezeichneten Entlüftungsvorrichtung ist gemeinsam, daß eine in diesen Ausführungsbeispielen jeweils zentrische Luftabführung 2 in Form eines Kanales oder einer Kernbohrung vorgesehen ist, die mit einer Ventilschraube 3 verschließbar ist. Ferner haben alle Entlüftungsvorrichtungen 1 mehrere Lufteintritte 4, die auf wenigstens einem Kreis oder Umfang an der Entlüftungsvorrichtung 1 vorgesehen sind und die jeweils mit der Luftabführung 2 über Kanäle, Leitungen oder Luftführungen 5 verbunden sind. Bei einzelnen Ausführungsformen, z. B. gemäß Fig. 12 oder Figuren 15 bis 18 erfolgt die Verbindung zwischen den Lufteintritten 4 und der Luftabführung 2 über einen Hohlraum 5a. Dabei sind wenigstens drei, bevorzugt vor allem bei der Verwendung von Bohrungen als Kanäle 5, vier Lufteintritte 4 oder eine sonstige ganzzahlige Anzahl solcher Lufteintritte 4 am Umfang und/oder an der Stirnseite des in Funktionsstellung inneren Bereiches der Entlüftungsvorrichtung 1 vorgesehen. Dies ist anhand praktisch aller Figuren bei allen Ausführungsbeispielen erkennbar.

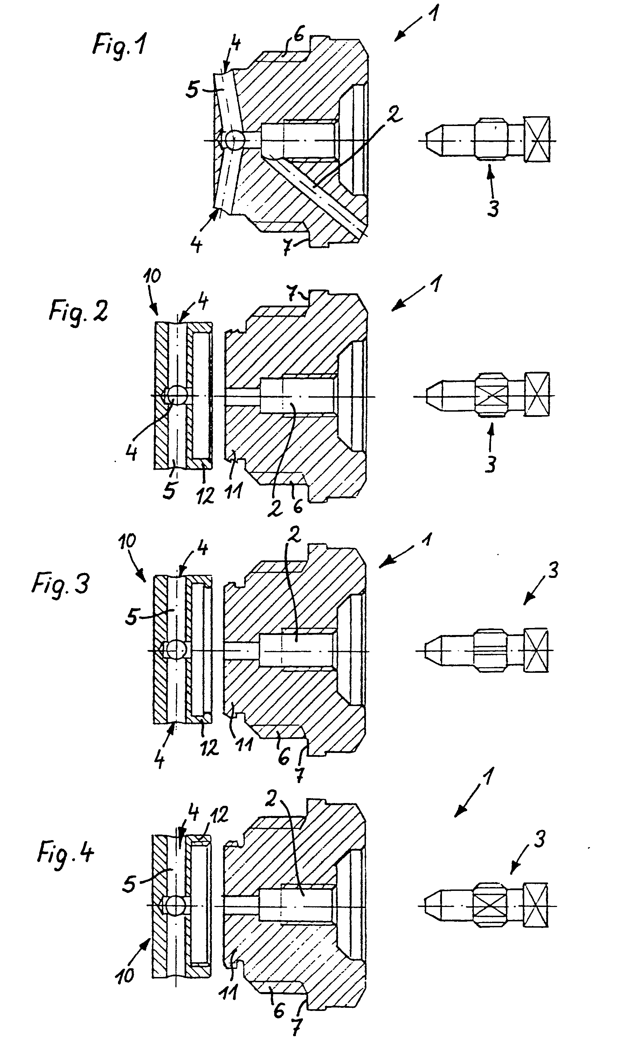

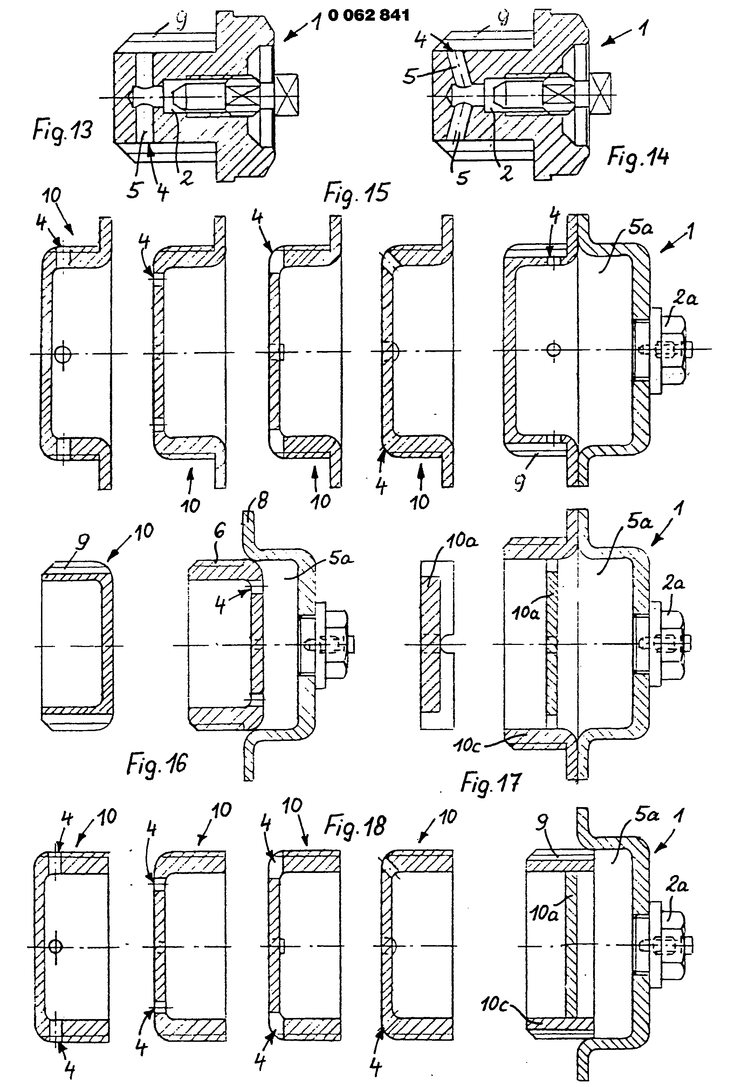

Die Entlüftungsvorrichtung 1 kann übrigens für ihre Montage z. B. eindrehbar, vorzugsweise einschraubbar sein und man erkennt in den Figuren 1 bis 12 jeweils ein entsprechendes Außengewinde 6 und einen dieses begrenzenden Anschlag 7. Es ist aber auch möglich, die Vorrichtung 1 mittels eines Flansches 8 und Befestigungselementen, wie z. B. Schrauben, an dem zu entlüftenden Behältnis od. dgl. anzubringen. Fig. 16 zeigt dabei eine Ausführungsform, die sowohl mit Hilfe eines Gewindes 6 als auch mit Hilfe eines Flansches 8 anbringbar ist. Etwas ähnliches gilt für die Ausführungsform nach den Figuren 15, 17 und 18.

Die Lufteintritte 4 können etwa gleichmäßig auf einem einzigen Kreis verteilt sein, wobei sie entweder am Umfang oder an der Stirnseite des in ein Behältnis reichenden Bereiches der Vorrichtung 1 angebracht sein können. Lösungen mit am Umfang angeordneten Lufteintritten 4 zeigen z. B. die Figuren 1 bis 8, Fig. 10, 11 und 12 teilweise sowie Fig. 13, 14, 15 teilweise und 18 teilweise. In den übrigen Figuren sind stirnseitig angeordnete Lufteintritte 4 oder aber am Übergang zwischen Stirnseite und Umfang angeordnete Lufteintritte 4 vorgesehen. Dabei werden diese Lufteintrittsöffnungen 4 jeweils aus einem möglichst großen Umfang oder Kreis um die insbesondere zentrale Luftabführung 2 angeordnet.

Die Lufteintritte und -leitungen 4 zu der Luftabführung 2 sind gemäß den Figuren 2 bis 7, 13 rein radial und beispielsweise nach den Figuren 1, 8, 14 sowie einzelnen Möglichkeiten der Figuren 15 und 18 schräg von außen nach innen verlaufend angeordnet bzw. als derartig verlaufende Kanäle 5 ausgebildet. Dabei haben diese Luftführungskanäle 5 in der überwiegenden Zahl der Fälle einen kreisförmigen Querschnitt, so daß sie z. A. als in die Luftabführung 2 oder eine Verlängerung 2a der Luftabführung 2 mündende Bohrungen ausgebildet sein können. Ist dabei eine gerade Zahl von sich jeweils fortsetzenden Luftkanälen 5 vorgesehen, können diese gegebenenfalls in einem Arbeitsgang durchgebohrt werden.

Bei den Ausführungsformen gemäß den Figuren 13 und 14, der ganz rechts dargestellten Anordnung gemäß Fig. 15 ist jeweils der Eintritt 4 in die Luftführungskanäle 5 od. dgl. innerhalb einer Nut 9, eines Schlitzes, einer Abflachung od. dgl. Verformung der Entlüftungsvorrichtung 1 angeordnet. Dadurch ergibt sich schon zu dem Lufteintritt 4 hin eine gewisse Führung, durch die das Abführen der Luft beim Entlüften verbessert werden kann. Darüber hinaus sind Ausführungsbeispiele vorgesehen, bei denen die Entlüftung mittels einer solchen Nut 9 erfolgt, wie es beispielsweise aus der Fig. 16 mit dem links separat dargestellten, noch zu beschreibenden Teil oder aus Fig. 18, ganz rechts dargestellte Alternative, hervorgeht. Bei diesen Beispielen führen die Nuten 9 jeweils koaxial in den mit der Luftabführung verbundenen Hohlraum 5a.

Die den Eintritt 4 in die Luftkanäle 5 aufweisenden Verformungen 9 können, wie in den Ausführungsbeispielen dargestellt, axial oder gegebenenfalls auch schraubenlinienförmig an der Entlüftungsvorrichtung 1 angeordnet sein.

Die Figuren 1, 13 und 14 zeigen im wesentlichen, von der Ventilschraube 3 abgesehen, einteilige Entlüftungsvorrichtungen 1. In den übrigen Ausführungsbeispielen sind Entlüftungsvorrichtungen 1 dargestellt, die im Bereich der Lufteintritte 4 wenigstens zweiteilig ausgebildet sind, wobei die zu der Luftabführung 2 oder einer Verlängerung 2a führenden Lufteintritte 4 und Kanäle 5 ganz oder teilweise in einem der beiden miteinander verbindbaren Teile angeordnet sind. In diesem Falle erhalten die zusätzlichen an einem Grundkörper der Vorrichtung 1 anbringbaren Teile die Bezugsziffer 10.

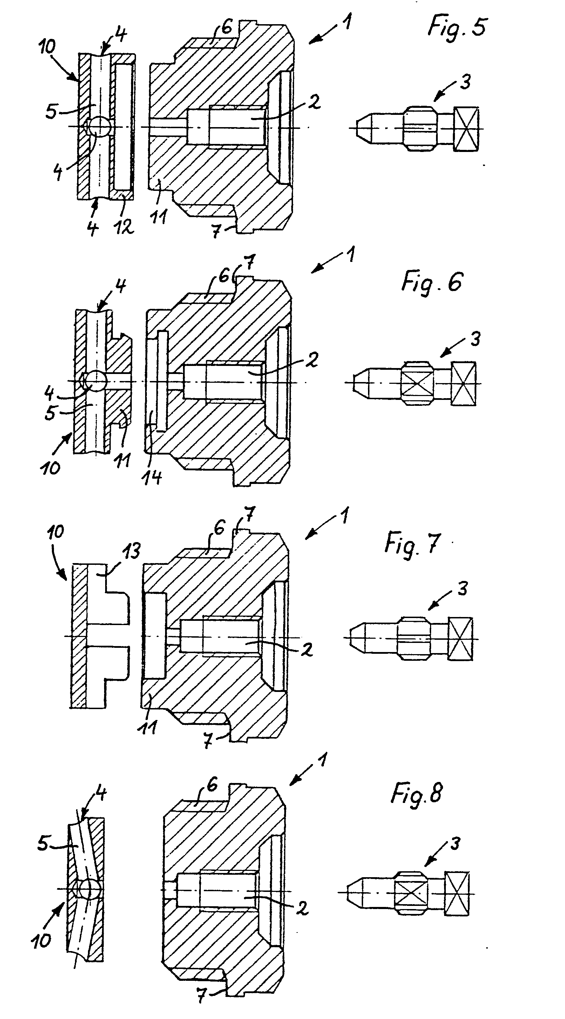

Das zusätzliche Teil 10 kann zur Bildung der Entlüftungsvorrichtung 1 an dem Grundkörper mittels Schnappbefestigung (Fig. 3 und 6), Schraubverbindung (Fig. 4 und mittels eigener Schrauben Fig. 15), mittels Aufdrucken oder Aufpressen (Fig. 2, 5, 7, 9 bis 12) oder mittels Schweißen oder Löten (Fig. 16 und 18) oder mittels Kleben (Fig. 8 oder auch die eine oder andere Ausführungsform, die beispielsweise zu einer Preßverbindung genannt wurde) befestigbar sein. Dabei ist es bei einzelnen der vorerwähnten Befestigungsarten, z. B. bei einer Schnappverbindung, möglich, daß das Teil 10 nach der dichten Verbindung mit dem Grundkörper relativ zu diesem drehbar und gegebenenfalls auch festlegbar ist.

Vor allem die vorerwähnten Schnapp-, Rast- oder Preßverbindungen führen zu einer Steckverbindung, die einfach und schnell durchführbar sit, wobei das aufsteckbare Teil 10 die Lufteintritte 4 aufweist. Ein solches Teil 10 könnte gegebenenfalls auch nachträglich an einer schon vorhandenen Entlüftungsvorrichtung mit zentraler Luftabführung anbringbar sein. Dadurch lassen sich die vorteilhafte Erfindung nicht aufweisende, jedoch schon gefertigte Entlüftungsvorrichtungen eventuell noch nachträglich umrüsten.

Bei den Ausführungsbeispielen nach den Figuren 2 bis 5, 7, 9 und 10 weist die Entlüftungsvorrichtung 1 einen Ansatz 11 mit jeweils der vorgesehenen Befestigungsart für das Zusatzteil 10 etwas anderer Formgebung auf, auf welchen Ansatz 11 ein ringförmiger Teil 12 des die Lufteintritte 4 ganz oder teilweise aufweisenden Zusatzteiles 10 paßt. Es ist aber z. B. gemäß Fig. 6 auch möglich, daß der Zusatzteil 10 einen Ansatz 11 aufweist, der in eine entsprechende Höhlung 14 der Entlüftungsvorrichtung 1 paßt oder teilweise eingreift, so daß zu verschiedenen dargestellten Kupplungsmöglichkeiten zwischen den Teilen 1 und 10 jeweils auch umgekehrt angeordnet sein könnten.

Bei den Ausführungsbeispielen nach den Figuren 2 bis 6 und 8 sowie 15, 16 (rechte Alternative) und 18 (die vier linken Alternativen) sind die Luftführungskanäle 5 und die Lufteintritte 4 jeweils in den Zusatzteilen 10, die unterschiedlichste Formen haben können, an zum Teil verschiedenen Stellen und in verschiedenen Anordnungen vorgesehen. In anderen Ausführungsbeispielen wie z. B. in den Figuren 7, 11, 12 und den oben nicht erwähnten Alternativen der Figuren 16, 17 und 18 ist jedoch vorgesehen, daß die Lufteintritte 4 und -führungen 5 zu der Luftabführung 2 durch das Verbinden der beiden Teile 1 und 10 gebildet werden, wobei wenigstens einer dieser Teile, in der Regel der Zusatzteil 10 (z. B. Fig. 7), aber auch eventuell der Grundkörper 1 (Fig. 10) Schlitze 13 od. dgl. aufweist, die durch das Gegenstück zu Kanälen od. dgl. Leitungen werden.

Dabei sind bei mehreren Ausführungsformen die zusätzlichen Teile 10 als Abdeckscheibe 10a oder als Abdeckkappe 10b od. dgl. Deckel ausgebildet, die die Lufteintritte 4 ganz oder teilweise enthalten oder bilden. Eine Reihe von derartigen Scheiben 10a erkennt man in den Figuren 10 bis 12, die teilweise aber auch Kappen 10b als weitere Möglichkeiten andeuten. Darüber hinaus sind solche Kappen vor allem in den Figuren 15 bis 18 erkennbar, wobei diese zum Teil wiederum durch Ringe 10c mit darin eingesetzten Scheiben 10a gebildet sind (Fig. 17 und Fig. 18 jeweils rechte Alternative).

Die Ausführungsformen nach den Figuren 12 und vor allem nach den Figuren 15 bis 18 sind dabei so gestaltet, daß die beiden miteinander verbindbaren und dadurch die Luftführung bildenden Teile 1 und 10 in verbundenem Zustand den schon erwähnten Hohlraum 5a umschließen oder bilden, in den einerseits die Lufteintritte 4 münden und von dem andererseits wenigstens eine Luftabführung 2 wegführt. Dabei kann eines der beiden Teile, in den Figuren 17 und 18 jeweils die Scheibe 10a, gegebenenfalls aber auch der Ring 10c der Fig. 18 oder die Kappe 10b wiederum der Fig. 18 in dem Hohlraum 5a des anderen axial und in Richtung der Luftabführleitung 2 verschiebbar und dadurch mit verschiedenen Einstecktiefen anbringbar sein, so daß unterschiedlich große Hohlräume 5a gebildet werden können. Sind die Scheiben 10a in den Ringen 10c jedoch fest angebracht, ist eine solche Hohlraumveränderung nur dann möglich, wenn der Ring 10c selbst axial verstellbar vorgesehen ist.

Die Ausführungsbeispiele nach den Figuren 15 bis 18 zeigen Entlüftungsvorrichtungen, bei denen die beiden Teile 1 und 10 aus Blech oder gegebenenfalls auch aus Kunststoff geformt und mit dem jeweiligen Gegenstück verschraubt, vernietet, verrastet, verschweißt, verlötet oder zusammengesteckt sind. Bei einer solchen Blechausbildung ist jeweils ein kappenförmiger Grundkörper 1 vorgesehen, an welchem als Luftabführung im Ausführungsbeispiel ein Entlüftungsstopfen 2a mit Entlüftungsschraube, vorzugsweise mit Ventilschraube od. dgl. angebracht ist. Die an diesen kappenförmigen Grundkörpern der Figuren 15 bis 18 anbringbaren Teile 10 haben die Lufteintritte 4 entweder am Umfang, an der Stirnseite oder auch im Übergangsbereich zwischen Umfang und Stirnseite und sind als Bohrungen, Einfräsungen od. dgl. ausgebildet, was in den Figuren 15 bis 18 ohne weiteres erkennbar ist. Es sei noch erwähnt, daß die Ausführungsbeispiele nach Fig. 17 und 18 jeweils ganz rechts dargestellte Alternativen auch als dreiteilige Ausführungsform aufgefaßt werden kann, bei der in dem jeweils zweiten Teil 10c eine Abschlußscheibe 10a anzuordnen ist.

Vor allem bei den übrigen Ausführungsbeispielen ist eine Fertigung aus Metall und/oder Kunststoff denkbar und möglich, wobei unter Umständen vor allem der das Befestigungsgewinde 6 aufweisende Grundkörper z. B. aus Metall bestehen kann, während das Zusatzteil 10 aus Kunststoff gefertigt sein kann. Es kann aber auch aus einem anderen Metall als der Grundkörper bestehen. Bei manchen Anwendungsbeispielen ist aber auch denkbar, den Grundkörper aus Kunststoff zu spritzen.

Ein ganz wichtiges Merkmal der Erfindung ist es, daß zumindest zwischen dem oder den in Gebrauchsstellung oberen Lufteintritt(en) 4 und der Luftabführung 2 wenigstens während der Entlüftung durch Strömung ein Druckgefälle vorgesehen ist. Dadurch wird selbst bei über untere Lufteintritte steigendem Flüssigkeitsniveau eine Entlüftung über die oberen Öffnungen ermöglicht.

Ferner sei noch eine Weiterbildung der Erfindung erwähnt, wonach die vorzugsweise zentrale und/oder axiale Luftabführung 2 durch die gesamte Entlüftungsvorrichtung 1 hindurchgeführt sein kann, so daß sie gleichzeitig einen zusätzlichen Lufteintritt bildet. Bei den Ausführungsbeispielen nach Fig. 1, 13 und 14 könnte die Kernbohrung der Luftabführung einfach entsprechend verlängert sein, so daß die Mittelbohrung im Inneren ins Freie mündet. Bei den Ausführungsbeispielen nach den Figuren 2 bis 12 sowie 15 bis 18 könnte eine mit der Luftabführung 2 bzw. 2a fluchtende Öffnung in dem jeweiligen Zusatzteil 10 oder 10a vorgesehen sein. Ein solcher zusätzlicher Lufteintritt wäre vor allem sehr einfach herstellbar und könnte zur Verbesserung der Entlüftung beitragen.

Bei allen Ausführungsbeispielen erkennt man, daß die Stirnseite, insbesondere die dem Behälterinneren zugewandte Stirnseite — bis auf die eventuell dort vorhandenen Lufteintritte 4 — geschlossen ist. Dadurch tritt die abzulassende Luft immer von außen bevorzugt oben in die Vorrichtung ein, auch wenn der Wasserspiegel über die Mitte der Vorrichtung steigt.

**Ansprüche**

1. Entlüftungsvorrichtung für mit einer Flüssigkeit zu füllende oder gefüllte Behältnisse oder Systeme, z. B. Rohrsysteme, insbesondere Heizungsanlagen, Heizkörper od. dgl., mit wenigstens einer vorzugsweise zentrischen Luftabführung nach außen und einem höher als diese liegenden Lufteintritt im Inneren des Behältnisses, dadurch gekennzeichnet, daß wenigstens drei Lufteintritte (4) etwa gleichmäßig auf einem Kreis, am Umfang und/oder an der Stirnseite des inneren Bereiches an der Entlüftungsvorrichtung (1) vorgesehen und jeweils mit der oder einer Luftabführung (2) verbunden sind und daß zumindest zwischen dem oder den in Gebrauchsstellung oberen Lufteintritt(en) (4) und der Luftabführung (2) wenigstens während der Entlüftung durch Strömung ein Druckgefälle vorgesehen ist.

2. Vorrichtung nach Anspruch 1, dadurch gekennzeichnet, daß sie (1) für ihre Montage insbesondere eindrehbar, vorzugsweise einschraubbar und/oder mittels Flansch (8) und Befestigungselementen, wie z. B. Schrauben, anbringbar ist.

3. Vorrichtung nach Anspruch 1 oder 2, dadurch gekennzeichnet, daß die Lufteintrittsöffnungen (4) der Entlüftungsvorrichtung (1) auf einem vorzugsweise größtmöglichen Umfang oder Kreis um die insbesondere zentrale und gegebenenfalls als Kernbohrung ausgebildete Luftabführung (2) angeordnet sind.

4. Vorrichtung nach einem der Ansprüche 1 bis 3, dadurch gekennzeichnet, daß die Lufteintritte (4) und -leitungen (5) zu der Luftabführung (2) als radial und/oder schräg von außen nach innen verlaufende Kanäle (5) ausgebildet sind.

5. Vorrichtung nach Anspruch 4, dadurch gekennzeichnet, daß die Luftführungskanäle (5) einen kreisförmigen Querschnitt haben und vorzugsweise als in die Luftabführung (2) oder eine Verlängerung (2a) der Luftabführung (2) mündende Bohrungen ausgebildet sind.

6. Vorrichtung nach einem der Ansprüche 1 bis 5, dadurch gekennzeichnet, daß der Lufteintritt (4) in die Luftführungskanäle od. dgl. innerhalb oder mittels einer Nut (9), eines Schlitzes, einer Abflachung od. dgl. Verformung eines als Entlüftungsvorrichtung (1) ausgebildeten Ventilkörpers angeordnet ist.

7. Vorrichtung nach einem der Ansprüche 1 bis 9, dadurch gekennzeichnet, daß die den Lufteintritt (4) in die Luftkanäle (5) aufweisende Verformung (9) axial oder schraubenlinienförmig an der Entlüftungsvorrichtung (1) verlaufend angeordnet ist.

8. Entlüftungsvorrichtung nach einem der Ansprüche 1 bis 7, dadurch gekennzeichnet, daß sie im Bereich der Lufteintritte (4) wenigstens zweiteilig ausgebildet ist und daß die zu der Luftabführung (2) führenden Lufteintritte (4, 5) ganz oder teilweise in einem der beiden miteinander verbindbaren Teile (1, 10) angeordnet sind.

9. Vorrichtung nach Ansprüche 8, dadurch gekennzeichnet, daß die die Entlüftungsvorrichtung bildenden Teile mittels Schnapp-, Schraub-, Preß-, Klebe-, Niet-, Einrast-, Schweiß-, Löt- od. dgl. Verbindung aneinander befestigt sind.

10. Vorrichtung nach einem der Ansprüche 8 oder 9, dadurch gekennzeichnet, daß die beiden Teile nach ihrer insbesondere dichten Verbindung relativ zueinander drehbar und gegebenenfalls festlegbar sind.

11. Vorrichtung nach einem der Ansprüche 8 bis 10, dadurch gekennzeichnet, daß eine Steckverbindung der beiden Teile (1, 10), z. B. eine Schnapp-, Rast-, Preß- oder Klebeverbindung od. dgl. vorgesehen ist, wobei das aufsteckbare Teil (10) die Lufteintritte (4) aufweist und gegebenenfalls nachträglich an einer Entlüftungsvorrichtung (1) anbringbar ist.

12. Vorrichtung nach einem der Ansprüche 8 bis 11, dadurch gekennzeichnet, daß die Entlüftungsvorrichtung (1) einen Ansatz (11) aufweist, auf welchen ein ringförmiger Teil (12) des die Lufteintritte (4) ganz oder teilweise aufweisenden Zusatzteiles (10) paßt.

13. Vorrichtung nach einem der Ansprüche 8 bis 11, dadurch gekennzeichnet, daß der Zusatzteil (10) einen Ansatz (11) aufweist, der in eine entsprechende Höhlung (12) der Entlüftungsvorrichtung (1) paßt oder teilweise eingreift.

14. Vorrichtung nach einem der Ansprüche 8 bis 13, dadurch gekennzeichnet, daß die Lufteintritte (4) und -führungen zu der Luftabführung (2) durch das Verbinden der beiden Teile (1, 10) gebildet sind und wenigstens einer der Teile Schlitze od. dgl. aufweist, die durch das Gegenstück zu Kanälen (5) od. dgl. Leitungen werden.

15. Vorrichtung nach einem der Ansprüche 8 bis 14, dadurch gekennzeichnet, daß ein Deckel, eine Abdeckscheibe (10a), eine Kappe (10b) od. dgl. vorgesehen ist, die die Lufteintritte (4) ganz oder teilweise enthält oder bildet.

16. Vorrichtung nach einem der Ansprüche 8 bis 15, dadurch gekennzeichnet, daß an der Stirnseite wenigstens eines der beiden zusammenfügbaren Teile (1, 10) an der dem Gegenstück zugewandten Seite Schlitze, Nuten od. dgl. eingeformt sind, die mit dem Gegenstück zusammen die Luftführungskanäle zu der Luftabführung (2) bilden.

17. Vorrichtung nach einem der Ansprüche 8 bis 16, dadurch gekennzeichnet, daß die beiden miteinander verbindbaren und dadurch die Luftführungen (5) bildenden Teile (1, 10) in verbundenem Zustand wenigstens einen Hohlraum (5a) umschließen oder bilden, in den einerseits Lufteintritte (4) münden und von dem andererseits wenigstens eine Luftabführung (2) wegführt.

18. Vorrichtung nach einem der Ansprüche 8 bis 17, dadurch gekennzeichnet, daß eines der beiden Teile in dem Hohlraum (5a) des anderen insbesondere axial oder in Richtung der Luftabführleitung (2) verschiebbar und/oder mit verschiedenen Einstecktiefen anbringbar ist.

19. Vorrichtung nach einem der Ansprüche 8 bis 18, dadurch gekennzeichnet, daß wenigstens eines der beiden Teile aus Blech geformt ist und mit dem Gegenstück verschraubt, vernietet, verschweißt, verlötet oder zusammengesteckt ist.

20. Vorrichtung nach einem der Ansprüche 8 bis 19, dadurch gekennzeichnet, daß insbesondere bei einer Ausbildung aus Blech ein kappenförmiger Grundkörper (1) od. dgl. vorgesehen ist, an welchem als Luftabführung ein Entlüftungsstopfen (2a) mit Schraube, vorzugsweise Ventilschraube od. dgl. angebracht ist.

21. Vorrichtung nach einem der Ansprüche 8 bis 20, dadurch gekennzeichnet, daß bei Verwendung einer mit einem Grundkörper verbindbaren Kappe als zweites Teil (10) der Vorrichtung (1) die Lufteintritte (4) an deren Umfang, an deren Stirnseite und/oder im Übergangsbereich zwischen Umfang und Stirnseite angeordnet und als Bohrungen, Einfräsungen od. dgl. ausgebildet sind.

22. Vorrichtung nach einem der Ansprüche 1 bis 21, dadurch gekennzeichnet, daß sie (1) als Metall und/oder Kunststoff besteht.

23. Vorrichtung nach einem der Ansprüche 1 bis 22, dadurch gekennzeichnet, daß bei einer mehrteiligen Ausführungsform der Grundkörper (1) mit der Luftabführung (2) aus Metall und der als Kappe, Deckel, Scheibe od. dgl. ausgebildete Zusatzteil (10) aus Kunststoff od. dgl. oder einem gegebenenfalls anderen Metall als der Grundkörper besteht.

24. Vorrichtung nach einem der Ansprüche 8 bis 21 oder 23, dadurch gekennzeichnet, daß einer der beiden sie bildenden Teile (1, 10) in seinem Inneren eine vorzugsweise axial verstellbare Abschlußscheibe (10a) aufweist.

25. Vorrichtung nach einem der Ansprüche 1 bis 24, dadurch gekennzeichnet, daß die vorzugsweise zentrale und/oder axiale Luftabführung (2) durch die gesamte Entlüftungsvorrichtung (1) hindurchgeführt ist, so daß sie gleichzeitig einen zusätzlichen Lufteintritt bildet.

26. Vorrichtung nach einem der vorstehenden Ansprüche, dadurch gekennzeichnet, daß die Stirnseite, insbesondere die dem Behälterinneren zugewandte Stirnseite bis auf die eventuell dort vorhandenen Lufteintritte (4) geschlossen it.

**Claims**

1. Air bleeding device for containers or systems to be filled with or already filled with a liquid, e. g. pipe systems, particularly heating systems, heating elements or the like, with at least one preferably central air outlet to the outside and an air inlet inside the container located higher than the air outlet, characterised in that at least three air inlets (4) are provided substantially symmetrically in a circle, on the circumference and/or on the end face of the inner area on the air bleeding device (1) and are each connected to the or a air outlet (2) and that at least during the bleeding as a consequence of flow a pressure gradient is provided at least between the upper air inlet or inlets (4) in the position of use and the air outlet (2).

2. Device according to claim 1, characterised in that, for its fitting, it (1) can be mounted, in particular, so as to be rotated in, preferably screwed in and/or by means of a flange (8) and fixing elements, such as, for example, screws.

3. Device according to claim 1 or 2, characterised in that the air inlet openings (4) of the air bleeding device (1) are arranged on a circumference or circle, preferably as large as possible, about the air outlet (2) which is, in particular, central and in that case in the form of a central bore.

4. Device according to one of claims 1 to 3, characterised in that the air inlets (4) and ducts (5) leading to the air outlet (2) are constructed as channels (5) extending radially and/or diagonally from the outside towards the inside.

5. Device according to claim 4, characterised in that the air guiding channels (5) are circular in cross section and are preferably constructed as bores opening into the air outlet (2) or into an extension (2a) of the air outlet (2).

6. Device according to one of claims 1 to 5, characterised in that the air inlet (4) into the air guiding channels or the like is arranged within or by means of a groove (9), a slot, a bevel or similar formation in a valve body formed as an air bleeding device (1).

7. Device according to one of claims 1 to 9, characterised in that the formation (9) comprising the air inlet (4) into the air channels (5) is arranged so as to extend axially or helically along the air bleeding device (1).

8. Air bleeding device according to one of claims 1 to 7, characterised in that in the region of the air inlets (4) it is formed in at least two parts and the air inlets (4, 5) leading to the air outlet (2) are arranged wholly or partially in one of the two parts (1, 10) which can be connected to each other.

9. Device according to claim 8, characterised in that the parts forming the air bleeding device are secured to one another by means of a snap, screw, press, adhesive, rivet, locking, welded, soldered or similar connection.

10. Device according to one of claims 8 or 9, characterised in that, in particular after being tightly connected to each other the two parts are rotatable and optionally fixable relative to each other.

11. Device according to one of claims 8 to 10, characterised in that a push-in connection for the two parts (1, 10) is provided, e. g. a snapfit, locking, press-fit or adhesive connection or the like, the part (10) which can be pushed on having the air inlets (4) and as required being subsequently capable of being mounted on an air bleeding device (1).

12. Device according to one of claims 8 to 11, characterised in that the air bleeding device (1) has an extension (11) onto which fits an annular part (12) of the additional part (10) which is wholly or partially provided with the air inlets (4).

13. Device according to one of claims 8 to 11, characterised in that the additional part (10) has an extension (11) which fits or partially engages into a corresponding cavity (12) in the air bleeding device (1).

14. Device according to one of claims 8 to 13, characterised in that the air inlets (4) and ducts leading to the air outlet (2) are formed by the connection of the two parts (1, 10) and at least one of the parts is provided with slots or the like which are made into channels (5) or similar ducts by the mating part.

15. Device according to one of claims 8 to 14, characterised in that a cover, a cover disc (10a) a cap (10b) or the like is provided which wholly or partially contains or forms the air inlets (4).

16. Device according to one of claims 8 to 15, characterised in that, on the end face of at least one of the two connectable parts (1, 10), on the side facing the mating part, there are slots, grooves or the like which, together with the mating part, form the air guiding channels leading to the air outlet (2).

17. Device according to one of claims 8 to 16, characterised in that the two parts (1, 10) which can be connected to each other and thereby form the air ducts (5) enclose or form at least one cavity (5a) in the connected state, into which air inlets (4) open on one side and from which at least one air outlet (2) leads away, on the other side.

18. Device according to one of claims 8 to 17, characterised in that one of the two parts is displaceable in the cavity (5a) of the other, particularly axially or in the direction of the air outlet duct (2) and/or can be mounted at different insertion depths therein.

19. Device according to one of claims 8 to 18, characterised in that at least one of the two parts is made of sheet metal and is screwed, riveted, welded, or soldered to or assembled with the mating part.

20. Device according to one of claims 8 to 19, characterised in that, in particular, in the case of a sheet metal construction, a cap-shaped base member (1) or the like is provided on which is mounted, as an air outlet, an air bleeding plug (2a) with a screw, preferably a valve screw or the like.

21. Device according to one of claims 8 to 20, characterised in that, if a cap connectable to a base member is used as the second part (10) of the device (1), the air inlets (4) are provided on the circumference or on the end face thereof and/or in the transitional area between the circumference and the end face and are formed as bores, milled slots or the like.

22. Device according to one of claims 1 to 21, characterised in that it (1) consists of metal and/or plastics.

23. Device according to one of claims 1 to 22, characterised in that, in a multi-part embodiment, the base member (1) with the air outlet (2) consists of metal and the additional part (10) in the form of a cap, cover, disc or the like consists of plastics or the like or a metal, if required different from that of the base member.

24. Device according to one of claims 8 to 21 or 23, characterised in that one of the two parts (1, 10) forming it comprises, in its interior, a preferably axially adjustable end disc (10a).

25. Device according to one of claims 1 to 24, characterised in that the preferably central and/or axial air outlet (2) passes through the entire air bleeding device (1) so that it at the same time forms an additional air inlet.

26. Device according to one of the preceding claims, characterised in that the end face, particularly the end face facing the interior of the container is closed except for any air inlets (4) provided therein.

## Revendications

1. Purgeur d'air pour récipients ou systèmes à remplir ou remplis d'un liquide, par exemple systèmes de tuyauteries, en particulier installations de chauffage, radiateurs, ou analogues, comportant au moins une évacuation d'air vers l'extérieur, de préférence centrale, et une entrée d'air située, à l'intérieur du récipient, plus haut que cette évacuation, caractérisé par le fait qu'au moins trois entrées d'air (4) sont prévues sur le purgeur d'air, (1) à peu près uniformément sur un cercle, à la circonférence et/ou au côté frontal de la région intérieure et sont reliées à l'évacuation ou à une évacuation d'air (2) et qu'au moins entre la ou les entrées d'air (4) situées en haut en position de service et l'évacuation d'air (2) est prévu, au moins pendant la purge d'air par écoulement, un gradient de pression.

2. Purgeur d'air selon la revendication 1, caractérisé en ce qu'il (1) peut, par son montage, en particulier être introduit par rotation, de préférence être vissé et/ou être mis en place au moyen d'une bride (8) et d'éléments de fixation, tels que, par exemple, des vis.

3. Purgeur d'air selon l'une quelconque des revendications 1 ou 2, caractérisé par le fait que les ouvertures d'entrée d'air (4) du purgeur d'air (1) sont disposées sur une circonférence ou un cercle de préférence aussi grand que possible, autour de l'évacuation d'air (2), en particulier centrale et éventuellement conçue par carottage.

4. Purgeur d'air selon l'une quelconque des revendications 1 à 3, caractérisé en ce que les entrées d'air (4) et les tuyaux à air (5) menant à l'évacuation d'air (2) sont conçus sous la forme de canaux (5) se dirigeant radialement et/ou obliquement de l'extérieur vers l'intérieur.

5. Purgeur d'air selon la revendication 4, caractérisé en ce que les canaux de guidage d'air (5) ont une section circulaire et sont de préférence conçus sous la forme de perforations débouchant dans l'évacuation d'air (2) ou dans un prolongement (2a) de l'évacuation d'air (2).

6. Purgeur d'air selon l'une quelconque des revendications 1 à 5, caractérisé en ce que l'entrée d'air (4) aux canaux de guidage d'air ou analogues, est disposée à l'intérieur d'une rainure (9), d'une fente, d'un plat ou d'une déformation similaire, d'un obturateur conçu sous forme de purgeur d'air (1).

7. Purgeur d'air selon l'une quelconque des revendications 1 à 9, caractérisé en ce que la déformation (9) présentant l'entrée d'air (4) menant aux canaux à air (4) est disposée, sur le purgeur d'air (1) avec une allure axiale ou hélicoïdale.

8. Purgeur d'air selon l'une quelconque des revendications 1 à 7, caractérisé en ce qu'il est constitué au moins en deux parties dans la région des entrées d'air (4) et que les entrées d'air (4, 5) menant à l'évacuation d'air (2) sont disposées totalement ou partiellement dans l'une des deux parties (1, 10) pouvant être reliées entre elles.

9. Purgeur d'air selon la revendication 8, caractérisé en ce que les parties formant le purgeur d'air sont fixées entre elles au moyen d'une liaison à déclic, à vissage, à emmanchement, à collage, à rivetage, à arrêt, à soudage, à brasage, ou analogues.

10. Purgeur d'air selon l'une quelconque des revendications 8 ou 9, caractérisé en ce que les deux parties, après leur assemblage, en particulier étanche, peuvent être fixées de manière à pouvoir tourner l'une par rapport à l'autre et à pouvoir éventuellement être bloquées.

11. Purgeur d'air selon l'une quelconque des revendications 8 à 10, caractérisé en ce qu'il est prévu un assemblage par emboîtement des deux parties (1, 10), par exemple un assemblage à déclic, à arrêt, à emmanchement ou à collage, ou analogues, la partie (10) pouvant être glissée en place présentant les entrées d'air (4) et pouvant éventuellement être disposée après coup sur un purgeur d'air (1).

12. Purgeur d'air selon l'une quelconque des revendications 8 à 11, caractérisé en ce que le purgeur d'air (1) présente un appendice (11) sur lequel s'adapte une partie annulaire (12) de la partie supplémentaire (10) présentant totalement ou partiellement les entrées d'air (4).

13. Purgeur d'air selon l'une quelconque des revendications 8 à 11, caractérisé en ce que la partie supplémentaire (10) présente un appendice (11) qui s'adapte ou s'engage partiellement dans une cavité correspondante (12) du purgeur d'air (1).

14. Purgeur d'air selon l'une quelconque des revendications 8 à 13, caractérisé en ce que les entrées (4) et passages d'air menant à l'évacuation d'air (2) sont formés par l'assemblage des deux parties (1, 10) et qu'au moins une des parties présente des fentes ou analogues, qui, à cause de la pièce complémentaire, deviennent des canaux (5) ou tuyaux similaires.

15. Purgeur d'air selon l'une quelconque des revendications 8 à 14, caractérisé en ce qu'il est prévu un couvercle, un disque de recouvrement (10a), un chapeau (10b) ou analogues, qui contient ou forme totalement ou partiellement les entrées d'air (4).

16. Purgeur d'air selon l'une quelconque des revendications 8 à 15, caractérisé en ce que sur le côté frontal d'au moins une des parties pouvant s'assembler (1, 10) sont formées, du côté tourné vers la pièce complémentaire, des fentes, des rainures ou analogues, qui forment, avec la pièce complémentaire, les canaux de guidage d'air vers l'évacuation d'air (2).

17. Purgeur d'air selon l'une quelconque des revendications 8 à 18, caractérisé en ce que les deux parties pouvant être assemblées entre elles (1, 10) et formant ainsi les passages d'air (5) délimitent ou forment, dans l'état assemblé, au moins une cavité (5a) dans laquelle débouchent, d'une part, des entrées d'air (4) et de laquelle part, d'autre part, au moins une évacuation d'air (2).

18. Purgeur d'air selon l'une quelconque des revendications 8 à 17, caractérisé en ce que l'une des deux parties peut coulisser dans la cavité (5a) de l'autre, en particulier axialement ou dans la direction du tuyau d'évacuation d'air (2) et/ou peut être disposée avec différentes profondeurs d'insertion.

19. Purgeur d'air selon l'une quelconque des revendications 8 à 18, caractérisé en ce qu'au moins une des deux parties est formée de tôle et est vissée, rivetée, soudée, brasée ou assemblée par emboîtement à la pièce complémentaire.

20. Purgeur d'air selon l'une quelconque des revendications 8 à 19, caractérisé en ce qu'en particulier dans le cas d'une exécution en tôle, il est prévu un corps principal (1) en forme de chapeau ou analogue, sur lequel est disposé, comme évacuation d'air, un bouchon de purge d'air (2a) avec vis, de préférence vis de valve ou analogue.

21. Purgeur d'air selon l'une quelconque des revendications 8 à 20, caractérisé en ce que dans le cas où l'on utilise comme deuxième partie (10) le dispositif (1) un chapeau pouvant être relié à un corps principal, les entrées d'air (4) sont disposées à sa circonférence, à son côté frontal et/ou dans la région de transition entre circonférence et côté frontal et sont conçues sous forme de perforations, de fraisures ou analogues.

22. Purgeur d'air selon l'une quelconque des revendications 1 à 21, caractérisé en ce qu'il (1) est formé de métal et/ou de matière synthétique.

23. Purgeur d'air selon l'une quelconque des revendications 1 à 22, caractérisé en ce que dans le cas d'un mode d'exécution en plusieurs parties, le corps principal (1), avec l'évacuation d'air (2) est formé de métal et que la partie supplémentaire (10) conçue sous forme de chapeau, de couvercle, de disque, ou analogue, est formée de matière synthétique ou analogue, ou éventuellement d'un métal autre que celui du corps principal.

24. Purgeur d'air selon l'une quelconque des revendications 8 à 21 ou 23, caractérisé en ce que l'une des parties (1, 10) qui le forment présente intérieurement un disque de fermeture (10a), de préférence réglable axialement.

25. Purgeur d'air selon l'une quelconque des revendications 1 à 24, caractérisé en ce que l'évacuation d'air (2), de préférence centrale et/ou axiale, passe à travers tout le purgeur d'air (1), de sorte qu'elle forme en même temps une entrée d'air supplémentaire.

26. Purgeur d'air selon l'une quelconque des revendications précédentes, caractérisé en ce que le côté frontal, en particulier le côté frontal tourné vers l'intérieur du récipient, est fermé à l'exception des entrées d'air (4) qui s'y trouvent éventuellement.

0 062 841

Fig.1

Fig.2

Fig.3

Fig.4

Fig. 5

Fig. 6

Fig. 7

Fig. 8

Fig. 9

Fig. 10

Fig. 11

Fig. 12

**0 062 841**

Fig. 13

Fig. 14

Fig. 15

Fig. 16

Fig. 17

Fig. 18